# EUROPEAN PATENT APPLICATION

(11) **EP 4 656 614 A1**
(43) Date of publication of application: **03.12.2025**
(21) Application number: 24382572.6
(22) Date of filing: 29.05.2024
(51) Int. Cl.: C04B 28/16, C04B 28/06, C04B 28/04

(54) **WATERPOOFING MORTAR CONTAINING POLYURETHANE DISPERSION WITH ETHYLENE OXIDE UNITS**

(71) Applicant: Sika Technology AG, 6340 Baar (CH)
(72) Inventor: Granizo, Luz, 28033 Madrid (ES); Pardos, Yolanda, 28055 Madrid (ES); Gimeno Santos, Patricia, 70186 Stuttgart (DE); García, Ramiro, 28108 Madrid (ES)
(74) Representative: Sika Patent Attorneys

(57) **Abstract**

The present invention relates to a composition comprising at least one water based polyurethane dispersion containing ethylene oxide units, cement, calcined clay and mineral filler. The composition can be mixed and applied without coagulation of the polyurethane dispersion. Upon curing, it has a high strength and good adhesion properties, with surprisingly low shrinkage and most surprisingly good water impermeability properties. It is particularly suitable for the use as waterproofing mortar.

## Description

### Technical field

Polymer modified cementitious mortar with good waterproofing properties, particularly suitable as waterproofing mortar.

### Background of the invention

Ordinary cement mortars are generally improved by the introduction of unreactive polymers in the cement matrix. Typical polymers therefor are acrylics, styrene acrylics, vinyl or vinylidene acetates, ethylene vinyl acetates and styrene butadiene copolymers. Such polymers are used in the form of waterbased dispersions or as redispersible powders, typically obtained by spray-drying of the corresponding dispersion. Such polymer modified mortars are typically easy to apply and non-hazardous. But although polymers improve the properties of ordinary cement mortars, the performance of such polymer modified mortars is still far away from that of cementitious products containing reactive polymers, such as epoxy resins as for example in Sikagard^{®}-720 EpoCem^{®} (from Sika), or isocyanate-containing polyurethanes as for example in Sikafloor^{®}-20 PurCem^{®} (from Sika). However, the handling and application of reactive polymer containing mortars is much more complicated. It requires the handling of hazardous materials, which needs specially trained and skilled workers and special equipment. Both are typically not available on ordinary building sites

Polyurethane dispersions are known to enable materials with high mechanical performance. They are mainly used for high quality coatings in various application fields. They contain a dispersed, unreactive polyurethane polymer, which is typically stabilized by incorporated anionic or cationic groups. However, the use of such polyurethane dispersions in cementitious systems is not common and difficult. The strong electrolytes in cemetitious systems typically disturb the stability of the dispersed polyurethane particles, which results in coagulation of the dispersion. This causes immediate thickening upon mixing of the dispersion with a cementitious material and the formation of an inhomogeneous, solid mass. Often, there is an immediate, unpleasant, ammonia-like smell upon mixing, caused by the release of an amine-based counterion of a anionic polyurethane dispersion.

US 3,905,929 teaches the manufacturing of polyurethane dispersions having side chain polyoxyethylene units. A combination with cementitious material is not taught.

US 5,807,431 describes the use of carboxylic groups containing polyurethane dispersions in cementitious systems, wherein the carboxylic groups are crosslinked by the addition of polycarbodiimides before mixing of the polyurethane dispersion with a cementitious material. But carbodiimides are hazardous materials which are not easy to handle on a building site.

WO 2019038297 describes a compostion comprising a waterbased polyurethane dispersion containing ethylene oxide units, cement and at least one mineral filler suitable for the use as repair mortar, waterproofing mortar or screed mortar.

WO 2022106320 describes a composition comprising Portland cement, calcined clay, and optionally aggregate to be used in a method for the refurbishment of porous construction materials.

### Summary of the invention

The purpose of this invention is to provide a polymer modified cementitious mortar with improved properties, which is easy to apply without handling of hazardous materials and which does not cause immediate thickening and/or lumps upon mixing.

Surprisingly this task is fulfilled by a composition according to claim 1. It comprises at least one waterbased polyurethane dispersion containing ethylene oxide units, at least one cement, at least one calcinated clay and at least one mineral filler. Unexpectedly, such a composition can be mixed easily with ordinary tools without coagulation of the polyurethane dispersion. It forms a fluid or paste-like slurry with usual workability time for mortar systems. The inventive composition enables polymer modified cementitious mortars with easy mixing and good application performance without forming lumps.

Surprisingly the hardened composition has a very low shrinkage, much lower than polymer modified mortars based on acrylics or ethylene vinyl acetates or the like. This is an important feature, as high shrinkage can lead to cracks in the cured material. A low shrinkage behaviour is particularly important for applications in high layer thickness or for wide area applications.

Further, the composition according to claim 1 shows a very good water impermeability properties, which is most surprising, as polyurethane dispersions containing ethylene oxide units are not known as being particularly hydrophobic. The water impermeability properties of the inventive composition are even close to the ones of cementitious mortars modified with reactive epoxy resins, which are known to form a highly hydrophobic material upon curing. Good water impermeability properties are important for waterproofing mortars, screed mortars or primers, which prevent water from beneath to cause damage to materials placed above. Such low shrinkage behavior and good water impermeability properties could not at all be expected from state of the art and is most surprising. With the described good properties and easy handling, the inventive composition is particularly suitable as repair mortar, waterproofing mortar or screed mortar. It enables polymer modified mortars with easy handling, good application properties, low shrinkage, good water impermeability properties and a highly hydrophobic surface without the need of handling a reactive polymer upon use of the mortar. Other aspects of the invention are described in other independent claims. Preferred aspects of the invention are described in dependent claims.

### Detailed description of the invention

The subject of the invention is a composition comprising
- at least one waterbased polyurethane dispersion containing ethylene oxide units;
- at least one cement;
- at least one calcined clay; and
- at least one mineral filler.

The term "ethylene oxide unit" refers to a unit of the formula -O-CH₂-CH₂- derived from a polymerisation process based on ethylene oxide.

The term "polyurethane dispersion containing ethylene oxide units" refers to a polyurethane material containing chains with repeated ethylene oxide units (O-CH₂-CH₂)ₙ dispersed in water. That means the polyurethane material is not water soluble but forms a stable dispersion in water.

The term "polyurethane polymer" includes all polymers prepared by the so-called diisocyanate polyaddition process. Besides urethane groups they can also contain other groups, particularly urea groups.

The term "mineral filler" refers to a powdery or small sized granular inorganic material different from cement with a size of usually below 5 mm.

The term "molecular weight" refers to the molar mass (given in grams per mole) of a molecule. The term "average molecular weight" refers to the number-average molecular weight (Mₙ) of a mixture of oligomeric or polymeric molecules. Preferably as determined by gel permeation chromatography (GPC) using polystyrene as a standard.

The term "shelf life stability" refers to the ability of a composition to be stored at room temperature in a suitable container under exclusion of moisture for a certain time interval, in particular several months, without undergoing significant changes in application or end-use properties.

Substance names starting with "poly", such as polyol, polyisocyanate or polyamine, refer to substances carrying two or more of the respective functional groups per molecule.

In this document the acronym "VOC" stands for "volatile organic compound", which is an organic substance having a vapour pressure of at least 0.01 kPa at a temperature of 293.14 K.

In this document, "room temperature" refers to a temperature of 23 °C.

The waterbased polyurethane dispersion contains ethylene oxide units. Repeated ethylene oxide units are hydrophilic. They act as internal surfactant and enable or facilitate the polyurethane polymer to form a stable dispersion in water. Such a composition can surprisingly be mixed and applied without coagulation of the polyurethane dispersion.

The polyurethane in the waterbased polyurethane dispersion is preferably not a copolymer with polymers from free radical polymerisation such as acrylics, styrene acrylics or vinyl acetates.

The polyurethane in the water based polyurethane dispersion has only minimal impact on the rheological properties, workability and working time of the composition.

Preferably the polyurethane dispersion contains an amount of ethylene oxide units in the range of from 5 to 50 weight-%, more preferably 5 to 30 weight-%, particularly 8 to 20 weight-%, based on the total weight of the polyurethane polymer without water, diluents or other additives.

It is important that the polyurethane dispersion contains a well-balanced amount of ethylene oxide units. Too high amount of ethylene oxide units brings undesired hydrophilic properties into the cured material, and too low amount of ethylene oxide units can cause instability of the dispersion. In the preferred range, the dispersed polyurethane material is stable, not too hydrophilic and does not act as a thickener in the mixed composition. This allows the application of the composition in the usual way for mortars.

Preferably, at least part of the ethylene oxide units are present in the polyurethane polymer as side chains. Preferably, these side chains are terminated with alkoxy groups, particularly methoxy groups. Such ethylene oxide side chains are particularly suitable as internal surfactant in polyurethane dispersions.

Preferably the polyurethane dispersion contains only a low amount of ionic groups incorporated in the polyurethane polymer. Preferably the amount of ionic groups incorporated in the polyurethane polymer is below 20 mmol, more preferably below 10 mmol, particularly below 5 mmol, ionic groups per 100 g of the polyurethane polymer without water, diluents or other additives.

Most preferably the polyurethane dispersion is free of incorporated ionic groups. Such a polyurethane dispersion can be called a "nonionic polyurethane dispersion".

Preferably the polyurethane dispersion has a solids content in the range of 15 to 65 weight-%, more preferably 25 to 60 weight-%.

Preferably the polyurethane dispersion contains at least one diluent, which is an organic material and liquid at room temperature. Preferably the diluent is free from isocyanate reactive groups.

Such a diluent can also be called solvent, plasticizer or coalescing agent. The diluent can help for manufacturing of the dispersion by diluting the organic phase, it can help to raise the solids content of the dispersion, it can help to form a high quality material upon curing of the dispersion and it can help to get benefical properties for the inventive composition. Preferably the diluent is not a VOC.

Preferred diluents include pyrrolidones such as N-methyl-2-pyrrolidone, N-ethyl-2-pyrrolidone or N-dodecyl-2-pyrrolidione, organic ethers such as propylene glycol ethers or dipropylene glycol ethers, acetals such as 2,5,7,10-tetraoxaundecane, and organic esters such as adipate esters, phthalate esters or phosphate esters.

A particularly preferred diluent is 2,5,7,10-tetraoxaundecane.

A suitable polyurethane dispersion is obtainable by dispersing an isocyanate-functional polyurethane polymer containing ethylene oxide units in water, followed by chain extension via reaction of the isocyanate groups with a chain extender.

Optionally, the isocyanate-functional polyurethane polymer contains a diluent free of isocyanate reactive groups when it is mixed with water, as mentioned above.

The step of dispersing can be done in any suitable way, particularly by mixing water into the isocyanate-functional polyurethane polymer, or by mixing the isocyanate-functional polymer into water, or by mixing the isocyanate-functional polyurethane polymer and water in a mixing unit of a continuous mixing equipment. Preferably the isocyanate-functional polyurethane polymer has a temperature in the range of 15 to 90 °C, more preferably 30 to 70 °C, particularly 50 to 70 °C, in the step of dispersing. Preferably the water has a temperature in the range of 1 to 35 °C, more preferably 1 to 25 °C, most preferably 5 to 20 °C, in the step of dispersing. It can be beneficial to add part of the water in the form of crushed ice. The combination of a prewarmed polymer and cold water enables a good and fast mixing of the polymer with the water and minimizes the amount of side reactions.

If a diluent is used together with the isocyanate-functional polyurethane polymer, the diluent can also help to decrease the viscosity of the polymer and support easier mixing of the polymer with the water.

The step of chain extension is typically done towards the end or shortly after the dispersion step.

Water can act as chain extender, as water reacts with isocyanate groups under chain extension and release of CO₂ to form urea linkages. If water is used as sole or main chain extender, the dispersed polyurethane polymer is preferably brought to a temperature in the range of 20 to 90 °C. Vacuum can be used, at least from time to time, to help the carbon dioxide leave the dispersion.

Preferably the chain extender is an amine, particularly a polyamine or an amino alcohol, with a molecular weight in the range of 32 to 400 g/mol.

Particularly preferred chain extenders include hydrazine, 1,2-ethane diamine, 1,2-propane diamine, 1,3-propane diamine, 1,4-butane diamine, 1,6-hexane diamine, 2-methyl-1,5-pentane diamine, 3-aminomethyl-3,5,5-trimethylcyclohexylamine (isophoronediamine), 2,2(4),4-trimethylhexanediamine, 1,3-bis(aminomethyl)benzene, 1,3-bis(aminomethyl)cyclohexane, 1,4-bis(aminomethyl)cyclohexane, 1,2-diaminocyclohexane, 1,3-diaminocyclohexane, 1,4-diaminocyclohexane, 1-methylcyclohexane-2,4(6)-diamine or combinations thereof.

Preferably the chain extender is used in such an amount that at least 80 %, preferably at least 90 %, of the isocyanate groups can react with the chain extender. After chain extension, any remaining free isocyanate groups can react with water under further chain extension.

It can be beneficial to use the chain extender in a diluted form with water.

If some ionic groups should be incorporated into the dispersion, a sulfonate group containing diamine can be used together with the chain extender, such as N-(2-aminoethyl)-2-aminoethane sufonate acid or a salt thereof (AAS salt).

The steps of dispersion and chain extension of the polyurethane polymer can be done in the presence of at least one diluent. If a VOC solvent, such as methyl ethyl ketone for example, is used as diluent, it is preferably removed from the dispersion after chain extension, particularly by a distillation process.

A suitable isocyanate-functional polyurethane polymer containing ethylene oxide units, which is suitable for dispersing in water followed by chain extension to form the described polyurethane dispersion, is obtainable by reaction of
- at least one first polyol free from ethylene oxide units with an average molecular weight in the range of 400 to 8'000 g/mol,
- at least one second polyol containing ethylene oxide units with an average molecular weight in the range of 400 to 8'000 g/mol, and
- at least one polyisocyanate,
whereby the isocyanate groups are in stoichiometric excess over the hydroxyl groups.

The polyisocyanate and the polyols are reacted via known methods, preferably at temperatures between 50 and 100 °C, optionally by using a suitable catalyst. Preferably the polyisocyanate is used in an amount corresponding to an isocyanate to hydroxyl group ratio in the range of 1.5 to 3, more preferably 1.8 to 2.5. Preferably the polyurethane polymer has a free NCO group content in the range of 1 to 10 weight-%, preferably 2 to 8 weight-%. Optionally the polyols and the polyisocyanate may be reacted in the presence of at least one diluent, which is free from isocyanate-reactive groups.

Suitable first polyols include polyether polyols, particularly with 1 ,2-propylene oxide- or with 1,4-butylenoxide-units, polyester polyols such as products of the polycondensation reaction of diols or triols with lactones or dicarboxylic acids or their esters or anhydrides, further polycarbonate polyols, block copolymer polyols with at least two different blocks of polyether, polyester or polycarbonate units, polyacrylate or polymethacrylate polyols, polyhydroxy-functional fats and oils, particularly natural fats and oils, polyhydrocarbon polyols, such as polyhydroxy-functional polyolefins, or mixtures thereof.

Preferred first polyols are diols.

Preferred first polyols have an average molecular weight in the range of 500 to 5'000 g/mol, preferably 800 to 4'000 g/mol.

Preferred first polyols are polypropylene glycols, polyester diols, polycarbonate diols and mixtures thereof.

A particularly preferred first polyol is a polypropylene glycol diol with an average molecular weight in the range of 800 to 4'000 g/mol, preferably 1'000 to 3'000 g/mol.

A preferred second polyol with ethylene oxide units is an ethoxylated derivative of a triol, particularly an ethoxylated trimethylol propane, of which only one of the three hydroxyl groups carries a chain of ethylene oxide units terminated by an alkoxy group, particularly a methoxy group. Such a second polyol incorporates a chain of ethylene oxide units in the form of a side chain, which is beneficial for its stabilising properties. Such a second polyol has preferably an average molecular weight in the range of 500 to 1'500 g/mol. It carries preferably 8 to 30 ethylene oxide units on average per molecule.

Such second polyols are commercially available, particularly Tegomer^{®} D 3403 fom Evonik or Ymer^{®} N120 fom Perstorp.

Another preferred second polyol is an ethylene oxide chain containing diol, particularly a polyethylene glycol. Such a second polyol has preferably an average molecular weight in the range of 500 to 3'000 g/mol. Such a second polyol doesn't incorporate the chain of ethylene oxide units as side chain. To act as surfactant, such ethylene oxide chains can form loops on the surface of the dispersed particles.

Optionally, a third polyol containing an ionic group or a group capable of forming an ionic group can be used together with the second polyol. Preferably, this third polyol is a diol containing a carboxylic group, particularly dimethylolpropanonic acid or dimethylolbutanoic acid or a polyester or polyether diol derived thereof.

If a third polyol containing a carboxylic group is used for the preparation of the isocyanate-functional polyurethane polymer, the carboxylic groups are neutralized with a suitable base to turn into anionic groups before the step of dispersing. A suitable base is particularly triethylamine or a waterbased solution of sodium carbonate, potassium carbonate, sodium hydroxide or potassium hydroxide.

Suitable polyisocyanates are aliphatic diisocyanates such as 1,6-hexanediisocyanate (HDI), 2,2,4- and 2,4,4-trimethyl-1,6-hexanediisocyanate (TMDI), 1-methyl-2,4(6)-diisocyanatocyclohexane, 1-isocyanato-3,3,5-trimethyl-5-isocyanatomethyl-cyclohexane (IPDI), perhydro-4,4'-diphenylmethane diisocyanate (H₁₂MDI), m- and p-xylylene diisocyanate (m- and p-XDI), m- and p-tetramethyl-1,4-xylylene diisocyanate (m- and p-TMXDI), or aromatic diisocyanates such as 4,4'-diphenylmethane diisocyanate, 2,4'-diphenylmethane diisocyanate and/or 2,2'-diphenylmethane diisocyanate and any mixtures of these isomers (MDI), or 2,4- and/or 2,6-toluylene diisocyanate and any mixtures of these isomers (TDI).

Preferred polyisocyanates are TDI, IPDI, TMDI or H₁₂-MDI, particularly TDI or IPDI.

The composition further comprises at least one cement.

Basically, all cements can be used. Preferably, the cement is selected from the group consisting of cements classified in DIN EN 197-1 as Portland cement (CEM I), Portland composite cement (CEM II), blast furnace slag cement (CEM III), pozzolanic cement (CEM IV), composite cement (CEM V); calcium aluminate cement; and calcium sulfoaluminate cement; preferably selected from cements classified in DIN EN 197-1 as Portland cement (CEM I) and calcium sulfoaluminate cement. A preferred cement is a CEM I Portland cement according to DIN EN 197-1, for example Portland cement type !-42.5, I-42.5 R or I-52.5, or a Portland cement according to ASTM C150.

It is preferred if the weight ratio of the cements classified in DIN EN 197-1 as Portland cement (CEM I) and the calcium sulfoaluminate cement is 2 - 20, preferably 7.5 - 15, more preferably 10 - 13.5.

If the composition contains calcium aluminate cement or calcium sulfoaluminate cement, preferably calcium sulfoaluminate cement, this is advantageous with respect to high values for early flexible strength, preferably after 24 hours, and a fast setting time. Preferably, the amount of the calcium sulfoaluminate cement is 1 to 10 weight-%, preferably 1.5 to 7.5 weight-%, based on the total weight-% of the composition. An amount of less than 1 weight-% leads to the disadvantage of longer setting times and low early mechanical strengths. An amount of more than 10 weight-% is disadvantageous with respect to short workability times. All industry standards and norms mentioned in the document refer to the versions in force at the time of filing the initial application.

Together with cement, the composition may preferably further comprise so called supplementary cementitious materials (SMC) selected from the group consisting of fly ash, slag, pozzolans and silica fume, preferably slag.These are materials which can react in finely divided form with calcium hydroxide and water to form compounds with cementitious properties.

Fly ash is a fine powder consisting mainly of silicate glass containing silica, alumina, iron and calcium. It is a by-product of the combustion of pulverized coal in electric power generation plants and is collected from the exhaust.

Slag, also called blast furnace slag, is used in the form of a fine powder. It is formed as non-metallic by-product when iron ore, coke and a flux (for example limestone or dolomite) are melted together in a blast furnace. Pozzolans are a broad class of siliceous or siliceous and aluminous materials of natural origin.

Silica fume, also called microsilica, is a byproduct of producing silicon metal or ferrosilicon alloys. It consists primarily of amorphous silicon dioxide (SiO₂).

Preferably, the amount of said supplementary cementitious materials is 5 to 20 weight-%, preferably 7.5 to 15 weight-%, based on the total weight of the composition. An amount of more than 20 weight-% is disadvantageous with respect to decreased early strengths and lower carbonation resistance.

The composition further comprises at least one mineral filler.

Preferably the mineral filler is selected from the group consisting of quartz flour, quartz sand, limestone sand, river sand, calcium carbonate, chalk, baryte, dolomite, wollastonite, talc and titanium dioxide, preferably quartz sand and calcium carbonate. More preferably, the mineral filler contains quartz sand and calcium carbonate.

It can be advantageous if the ratio of quartz sand with a particle size of < 0.6 mm compared to quartz sand with a particle size of ≥ 0.6 mm is 0.3 - 2.0, preferably 0.5 - 1.5, more preferably 0.8 - 1.2. This is advantageous with respect to higher values in flexible strength, lower shrinkage values and higher adhesion values. This can be seen, for example, in the comparison of E1 with E2 in table 3.

It can be also advantageous if the ratio of quartz sand with a particle size of < 0.6 mm compared to quartz sand with a particle size of ≥ 0.6 mm is 2.5 - 10, preferably 3.5 - 7.5, more preferably 4.5 - 5.5. This is advantageous with respect to higher values in the flow testing, especially after 6 min, a shorter setting time and a higher value in humidity. This can be seen, for example, in the comparison of E2 with E1 in table 3.

Preferably, the amount of the mineral filler is 20 to 70 weight-%, preferably 30 to 60 weight-%, more preferably 40 to 50 weight-%, based on the total weight of the composition. An amount of less than 20 weight-% leads to the disadvantage of shrinkage increase and mechanical strength decrease. An amount of more than 70 weight-% is disadvantageous with respect to decreased adhesion and waterproofing properties.

The composition may preferably further comprise other mineral materials which can react with water, particularly calcium sulfate. This is advantageous with respect to higher values in air exclusion and flexible strength, reduction in shrinkage and high values for adhesion. This can be seen, for example, in the comparison of E3 with E2 in table 3.

Preferably, the amount of calcium sulphate is 1 to 5 weight-%, preferably 1,5 to 3 weight-%, based on the total weight of the composition. An amount of less than 1 weight-% is disadvantageous with respect to decreased workability time. An amount of more than 5 weight-% is disadvantageous with respect to dimensional stability.

The composition contains at least one calcined clay, preferably metakaolin. Throughout the present invention the term "clay" refers to a solid material composed to at least 30 wt.-%, preferably to at least 35 wt.-%, especially to at least 75 wt.-%, each relative to its dry weight, of clay minerals. Such clay minerals preferably belong to the kaolin group (such as kaolinite, dickite, nacrite or halloysite), the smectite group (such as montmorillonite, nontronite or saponite), the vermiculite group, serpentine, palygorskite, sepiolite, chlorite, talc, pyrophyllite, micas (such as biotite muscovite, illite, glauconite, celadonite, and phengite) or mixtures thereof. Clay minerals belonging to the kaolin group, especially kaolinite, and micas, especially muscovite and illite, as well as mixtures thereof are especially preferred.

A "calcined clay" is a clay material that has been put to a heat treatment, preferably at a temperature between 500 - 900 °C, or in a flash calcination process at temperatures between 800 - 1100 °C. A suitable flash calcination process is for example described in WO 2014/085538. A calcined clay is an anhydrous material. It is preferred within the present context that during the calcination of clay the clay material is dehydroxylated to an amorphous material while the formation of crystalline high temperature aluminosilicate phases such as mullite is prevented. Calcined clays, and especially calcined kaolinite, generally are amorphous, have a significantly higher specific surface as compared to the original clay, and have a pozzolanic activity. According to especially preferred embodiments of the present invention, the calcined clay is metakaolin. Metakaolin is a material resulting from the calcination of kaolinite or minerals that are rich in kaolinite, e.g. have a content of kaolinite of at least 30 wt.-%, preferably to at least 35 wt.-%, relative to its dry weight. Calcination temperatures for the manufacturing of metakaolin typically are in the range of 500 - 900 °C.

Especially preferred calcined clays within the present context have an average particle size D50 of not more than 10 µm, preferably of not more than 6 µm, especially of 1 - 5 µm.

The particle size can be determined by laser diffraction as described in ISO 13320:2009. In particular, a Mastersizer 2000 instrument with a Hydro 2000G dispersion unit and the Mastersizer 2000 software from Malvern Instruments GmbH (Germany) is used. Isopropanol, for example, is suitable as the measuring medium. Preferably, a particle size of non-spherical or irregular particles is represented by the equivalent spherical diameter of a sphere of equivalent volume. Throughout this invention, whenever a range of particle sizes is given, these particle sizes are measured by laser diffraction. The lower values of the ranges given for the particle size herein represent D10 values whereas the upper values of the ranges given for the particle size herein represent D90 values of the respective particle size distribution. In other words, the lower values of such ranges correspond to the particle size where only 10% of all particles have a lower particle size, whereas the upper values of such ranges correspond to the particle size where only 10% of all particles have a larger particle size. The average particle size corresponds in particular to the D50 value (50% of the particles are smaller than the given value, 50% are correspondingly bigger).

Preferably, the amount of calcinated clay, preferably metakaolin, is 1 to 5 weight-%, preferably 1,5 to 3 weight-%, based on the total weight of the composition. An amount of less than 1 weight-% is not helpful in reduction of pinhole formation and improvement of the electrical resistivity. An amount of more than 2.0 weight-% is disadvantageous with respect to increased shrinkage values.

Preferably, the composition contains calcium oxide. This is advantageous with respect to reduction in shrinkage, especially in combination with calcined clay, more preferably in combination with metakaolin. Preferably, the amount of calcium oxide is 0.2 to 2.0 weight-%, preferably 0.6 to 1.25 weight-%, based on the total weight-% of the composition. An amount of less than 0.2 weight-% leads to the disadvantage of higher values of shrinkage. An amount of more than 2.0 weight-% is disadvantageous with respect to high expansion values under water and loss of dimensional stability.

It is further preferred, if the composition contains less than 5 wt.-%, preferably less than 2 wt.-%, more preferably less than 1 wt.-%, most preferably less than 0.1 wt.-%, of at least one organic polymer different from polyurethane. Such a polymer might be present in the form of a waterbased polymer dispersion or in the form of a redispersible powder, which is preferably obtained by spray-drying of a corresponding polymer dispersion. Preferred is an organic polymer comprising styrene, ethylene, butadiene, acrylic esters, vinylidene chloride, vinyl chloride or vinyl acetate. Such a polymer is obtainable in the form of a waterbased dispersion by free-radical polymerization of unsaturated water-insoluble monomers in aqueous medium in the presence of at least one surfactant.

A preferred organic polymer different from polyurethane is selected from the group consisting of homo- or copolymers of acrylic esters (polyacrylates), copolymers of styrene and butadiene (SBR), copolymers of styrene and acrylic esters, polyvinylacetate (VA), copolymers of vinyl acetate, particularly ethylene vinyl acetate copolymers (EVA), polyvinylchloride, polychloroprene, and copolymers and mixtures thereof, and copolymers thereof with polyurethane.

Particularly preferred is EVA, particularly in the form of a redispersable powder.

Further particularly preferred are polyacrylates or styrene acrylates. These enable cost effective mortars with good properties.

The inventive composition optionally contains further ingredients, particularly
- accelerators for cement hydration, particularly nitrites, nitrates, chlorides, sulphates, carbonates, fluorides, oxides or hydroxides of alkali or earth alkali metals, organic amines, particularly hydroxyalkyl amines, or mixtures or combinations thereof,
- retarders of cement hydration, particularly hydroxy carboxylic acids or their salts, preferably tartaric acid,
- cement plasticizers, particularly PCE superplasticizers,
- shrinkage reducers,
- dispersing agents,
- defoamers,
- air detraining agents,
- surfactants,
- thickeners, particularly cellulose ethers,
- fibres, particularly out of glass, cellulose or polypropylene,
- light weight aggregates,
- stabilizers,
- colouring agents, particularly pigments, or
- biocides.

Preferably the composition is a multi component composition comprising
- a first component comprising the at least one waterbased polyurethane dispersion containing ethylene oxide units, and
- a second component comprising at least one cement, at least one calcined clay and at least one mineral filler,
wherein the first component is a waterbased fluid and the second component is a solid powder or granular material.

The first and the second component are, each separately, storage stable when stored in a suitable container. For the first component, a suitable container is a closed watertight container. For the second component, a suitable container is also a closed watertight container or a closed paper bag which is stored in the absence of liquid water.

Further additives can be part of the first or the second component.

Preferably, if the composition contains calcium oxide, calcined clay, calcium sulfate and/or supplementary cementitious materials, they are part of the second component.

When contacted with each other and mixed together, the components form a fluid or paste-like slurry, which can be applied in the usual way for a state of the art fresh mortar without any coagulation of the polyurethane dispersion.

Just after mixing, the mixed composition is a so called "fresh mortar". Upon mixing, the cement comes into contact with water, which means the cement starts to react with water. This is called "hydration" or "setting" of the cement and leads finally to a cured or hardened mortar. The start of the hydration of the cement is usually delayed for minutes to hours from the mixing step, depending on the type of cement, used accelerators or retarders, temperature and other ingredients in the composition.

If SMC or other reactive mineral materials are part of the formulation, these contribute also to the setting reaction and the final strength of the hardened mortar.

The time between the mixing step and the moment, when the composition starts to build up strength, is called "workability time". It is important that the end of the workability time is not limited by an instability of the dispersed polymer particles, but by the setting of the cement in the composition. This ensures a homogenous material of high strength with good water impermeability and low shrinkage.

A suitable method for mixing of the components of the composition is mixing by hand with a spatula for small portions, or mixing with a mechanical mixer, or mixing in a cement mixer with mixing drum. The mixing time is dependent on the consistency and amount of the material. Mixing should be done until a homogenous material is formed. This takes typically about 30 seconds to 5 minutes.

The mixed composition (or the fresh mortar, respectively), is applied on a substrate with a suitable method within the workability time. Any usual method to apply fresh mortars is suitable, such as pouring, pumping, brushing, knife-coating, trowelling, spraying or rolling.

After the application of the composition, most of the water is disappearing out of the composition during the process of hardening (or curing, respectively) to a hardened mortar. Some of the water is used up by the hydration of the cement, some of the water is possibly soaked into the substrate, on which the composition was applied, particularly if the substrate was a porous, rather dry material such as concrete, mortar, brick, sand, soil, rock or the like, and remaining water is eventually evaporating out of the composition, depending on the environmental conditions. During the loss of water in the hardening composition, the polymer particles of the polyurethane polymer and other polymer particles, if present, get in closer contact with each other and coalesce eventually to a cured polymer material, which is not redispersable anymore when the hardened mortar is in contact with water.

The application and the process of hardening typically takes place under environmental conditions, which means preferably at temperatures in the range of 5 to 45 °C and relative humidity in the range of 5 to 95 %.

Another object of the invention is a process to produce the inventive composition by providing
- a first component comprising at least one waterbased polyurethane dispersion containing ethylene oxide units, as described before,
- a second component comprising at least one cement, at least one calcined clay and at least one mineral filler, as described before,
- and optionally further components,
wherein these components are each separately storage stable in a suitable container.

This process to produce the inventive composition is preferably followed by the application of the composition, comprising the steps of
- mixing the first and the second and optionally further components of the composition by a suitable method,
- applying the mixed composition with a suitable method within its workability time, and
- hardening or curing of the composition by setting of the cement.

Another object of the invention is the hardened composition obtained by the process described above.

A preferred composition contains:
- 1 to 10 weight-%, more preferably 1 to 3 weight-%, of polyurethane polymer;
- 0 to 5 weight-%, preferably 0.1 to 2 weight-%, diluents;
- 10 to 30 weight-%, preferably 15 to 25 weight-%, of Portland cement (CEM I);
- 1 to 10 weight-%, preferably 1.5 to 7.5 weight-%, of calcium aluminate cement;
- 1 to 5 weight-%, preferably 1,5 to 3 weight-%, of calcined clay, preferably metakaolin;
- preferably 0.2 to 2.0 weight-%, more preferably 0.6 to 1.25 weight-%, of calcium oxide;
- preferably 1 to 5 weight-%, preferably 1,5 to 3 weight-%, of calcium sulphate;
- 5 to 20 weight-%, preferably 10-15 weight-%, of latent hydraulic material, preferably slag;
- 20 to 70 weight-%, more preferably 40 to 50 weight-%, of mineral fillers, preferably calcium carbonate and quartz sand;
- 5 to 30 weight-%, particularly 10 to 20 weight-%, of water; and
- 0 to 2 weight-%, preferably 0.5 to 1 weight-%, of additives,
based on the total weight of the composition.

Preferably, more than 80 wt.-%, preferably more than 90 wt.-%, more preferably more than 95 wt.-%, even more preferably more than 98 wt.-%, most preferably the composition consists of the above mentioned components.

Another subject of the invention is the use of a water based polyurethane dispersion containing ethylene oxide units as an additive in a cementitious mortar system, as previously described. Surprisingly, this use enables polymer modified mortars with good application properties, surprisingly low shrinkage, surprisingly good water impermeability properties, high strength and good adhesion properties.

Preferably, the water based polyurethane dispersion containing ethylene oxide units is a nonionic polyurethane dispersion.

### Examples

The following examples illustrate the present invention without being limitative.

"Normal climate" means a temperature of 23±1°C and a relative atmospheric moisture of 50±5%. "Nc" means "normal climate".

The following table 1 gives an overview of the raw materials used

**Table 1: Raw materials used**

| | |
|---|---|
| OPC1 | CEM I 52.5 R (white), Blaine surface 4400-4500 cm2/g |
| OPC2 | CEM I 52.5 R (grey), Blaine surface 4300-4600 cm2/g |
| OPC3 | Calcium sulfoaluminate cement (CSA) |
| Slag | Ground Granulated blast furnace slag, Blaine surface 4000-6000 cm2/g % SiO2 30-40% and % Al2O3 10-15% |
| CaSO₄ | Anhidrit < 100 microns |
| CaO | Lime |
| Sand 1 | Quartz sand (0.1 - 0.3 mm) |
| Sand 2 | Quartz sand (0.1 - <0.6 mm) |
| Sand 3 | Quartz sand (0.6 - 1 mm) |
| SRA | Shrinkage reducing agent, modified polyether |
| CaCO₃ | Omyacarb 10 BE |
| Calcined clay | Metakaolin from high purity kaolin clay (D90: 15 µm, D50: 3.2 µm) |
| Defoamer | Defoamer based on hydrocarbons VOC and silicon free |
| CP1 | Cement plasticizer, polycarboxylate polymer (PCE) |
| CP2 | Cement plasticizer, sodium salt of a sulfamic acid modified melamine-formaldehyde polymer |

### 1. Nonionic Polyurethane Dispersions:

### PUD-N1 :

50.88 weight parts water were placed in a round bottom flask at a temperature of 17 °C. Then 28.4 weight parts of the isocyanate-functional polyurethane polymer **P1** produced as described below, which had a temperature of 50 °C, was added under good stirring, while a milky dispersion was formed. Immediately after, 12.72 weight parts of ice (frozen water) was added under maintained good stirring, followed by the addition of 8.00 weight parts of a solution of 20 weight-% Dytek^{®}-A (2-methylpentamethylenediamine, from Invista) in water under good stirring. The dispersion was stirred for another 30 min.

The obtained waterbased polyurethane dispersion was a milky white fluid containing approximately 70 weight-% water, 24.9 weight-% chain-extended polyurethane polymer and 5.1 weight-% of the diluent 2,5,7,10-tetraoxaundecane. It is a nonionic polyurethane dispersion containing ethylene oxide units with a solids content of 30 weight-%.

The isocyanate-functional polyurethane polymer **P1** was obtained by placing 18 weight parts 2,5,7,10-tetraoxaundecane, 16.5 weight-% Ymer^{®} N120 (linear OH-difunctional polyethylene glycol monomethyl ether with an average molecular weight of 1000 g/mol based on ethoxylized trimethylolpropane, from Perstorp), and 46.05 weight-% Voranol^{®} P 2000 (polypropylene glycol diol with an average molecular weight of 2000 g/mol, from Dow) in a round bottom flask under nitrogen atmosphere, followed by heating under stirring to 55 °C. Then, 19.38 weight parts Vestanat^{®} IPDI (isophoronediisocyanate, from Evonik) and 0.07 weight-% dibutyltindilaurate were added and the mixture was heated to 90 °C for 2 hours under constant stirring.

The obtained isocyanate-functional polyurethane polymer was a clear liquid. It was cooled to room temperature and stored in a moisture-tight container under nitrogen atmosphere. For the use in the polymer dispersion, it was preheated to 50 °C. The amount of EO groups based on the total weight the prepolymer PLID-N1 is 14.6 wt.-%.

### PUD-N2:

Cromelastic^{®} NI-78 (nonionic polyether-based aliphatic polyurethane dispersion with a solids content of 30 weight-%; from Cromogenia-Units). The amount of EO groups based on the total weight the prepolymer PUD-N2 is between 8 to 20 weight-%.

### 2. Dispersions for comparison:

### DISP-1:

Cromelastic^{®} C-400 (cationic aliphatic polyurethane dispersion with a solids content of 25 weight-%; from Cromogenia-Units).

### DISP-2:

Cromelastic^{®} SE-80 (anionic polyether-based aliphatic polyurethane dispersion with a solids content of 40 weight-%; from Cromogenia-Units).

### 3. Waterproofing Mortars:

### Examples E1 - E3 and Ref. 1 :

A liquid **component A1** was made by blending 40.7 weight parts of **PUD-N2,** 58 weight parts water, 1.0 weight parts of polypropylene glycol and 0.3 weight parts of a polyether siloxane based defoamer. The component **A1** was stored in a closed polyethylene bottle, where it was storage stable.

A solid granular **component B** was made by blending the weight parts of the additives shown in table 2. The components **B** were stored in a sealed bucket, where they were storage stable.

The waterproofing mortars of examples **E1 - E3** and **Ref.1** were mixed by blending each component A with the component B in the mixing ratio given in table 2 and mixed with a Hobart-mixer for 3 minutes to form a homogenous fresh mortar. Each fresh mortar was then tested as described below.

An additional test was made with a composition based on M-9 as described in the experimental section of WO 2019038297 as reference example **Ref.1.**

Application properties and workability time were measured by doing a **flow test** according to EN 1015-3 after 6 minutes, 30 minutes and 50 minutes from end of mixing.

**Flexural strength** was determined after 24 hours, 48 hours, 7 days and 28 days storage in normal climate according to EN 13892-2.

**Bond strength** was determined on dry concrete after 7 days normal climate by pull-off according to EN 1542.

**Linear shrinkage** ("Shrinkage") was determined in normal climate according to EN 12617-4 on prismatic specimens of 40 x 40 x 160 mm size.

**Electrical resistivity** after 50 days ("E. resistivity 50d") was determined according to UNE 83988-2.

**Liquid-water transmission rate** after 24 weeks ("LWTR 24w") was determined according to ISO 1062-3.

**Setting time** was determined according to EN 13294-1.

**Density/air exclusion** was determined according to EN 12350-6 and EN 12350-7. **Application/humidity** was determined according to DIN/ZTV SIB 90.

The results are given in table 3.

"(ref.)" means reference example.

The same compositions as shown before as E1 - E3 were produced using the same solid granular **component B** but using an alternative liquid **component A.** This alternative liquid **component A** was made by blending 60.0 weight parts of **PUD-N1,** 39.5 weight parts water and 0.5 weight parts of polyether siloxane based defoamer. The alternative component **A** was stored in a closed polyethylene bottle, where it was storage stable. The experimental measurements shown it table 3 were repeated with said compositions and showed qualitatively the same results as shown in table 3 for E1 - E3.

**Table 2**

| | **Ref.1** | **E1** | **E2** | **E3** |
|---|---|---|---|---|
| **Component 8** | | | | |
| OPC1 | 0.0 | 17.1 | 17.1 | 17.1 |
| OPC2 | 6.8 | 4.3 | 4.3 | 4.3 |
| OPC3 | 12.0 | 1.7 | 1.7 | 1.7 |
| Slag | 0.0 | 10.3 | 10.3 | 10.3 |
| CaSO₄ | 5.1 | 0.0 | 0.0 | 1.7 |
| CaO | 0.0 | 0.9 | 0.9 | 0.9 |
| Sand 1 | 0.0 | 10.3 | 15.4 | 15.6 |
| Sand 2 | 34.0 | 12.0 | 20.5 | 20.5 |
| Sand 3 | 0.0 | 20.8 | 7.1 | 5.1 |
| SRA | 0.2 | 0.2 | 0.2 | 0.2 |
| CaCO₃ | 27.0 | 5.1 | 5.1 | 5.1 |
| Calcined clay | 0.0 | 2.6 | 2.6 | 2.6 |
| Defoamer | 0.1 | 0.1 | 0.1 | 0.1 |
| CP1 | 0.2 | 0.2 | 0.2 | 0.2 |
| CP2 | 0.1 | 0.1 | 0.1 | 0.1 |
| **Total (wt.-%)** | 85.5 | 85.5 | 85.5 | 85.5 |

| **Component A** | | | | |
|---|---|---|---|---|
| A1 | 14.5 | 14.5 | 14.5 | 14.5 |
| **Total (wt.-%)** | 14.5 | 14.5 | 14.5 | 14.5 |
| **Total A + B (wt.-%)** | 100 | 100 | 100 | 100 |

**Table 3, n.d. = not determined**

| | **Ref.1** | **E1** | **E2** | **E3** |
|---|---|---|---|---|
| Flow test, 6min | n.d | 310 | 348 | 332 |
| Flow test, 30min | 325 | 324 | 331 | 321 |
| Flow test, 50min | n.d | 324 | 324 | 308 |
| Density/ air exclusion | n.d | 2,090/4,9 | 2,012/6,2 | 1,995/6,8 |
| Application/ humidity | n.d | Ok, less 10% | Ok, 12% | Ok, 10% |
| Setting time (initial/final) | n.d | 3h35min/ 3h55min | 3h05min/ 3h25min | 4h50min/ 5h10min |
| FS 24h [MPa] | 3.5/ n.d | 3,9/16,2 | 3,7/14,6 | 5,4/18,9 |
| FS 48h [MPa] | n.d | 5,4/29,4 | 4,2/26,2 | 5,2/28,1 |
| FS 7d [MPa] | 4.0/ n.d | 9,2/53,7 | 7,2/44,9 | 9,8/49,6 |
| FS 28d [MPa] | 5.5/ n.d | 10,5/62,4 | 8,87/50,68 | 10,97/56,86 |

| Shrinkage, Days: | | | | |
|---|---|---|---|---|
| 2d | n.d | -0.042 | -0.094 | -0.017 |
| 4d | n.d | -0.231 | -0.315 | -0.185 |
| 7d | n.d | -0.294 | -0.417 | -0.294 |
| 14d | n.d | -0.388 | -0.535 | -0.394 |
| 21d | n.d | -0.458 | -0.573 | -0.404 |
| 28d | n.d | -0.485 | -0.604 | -0.435 |
| 35d | n.d | -0.55 | -0.631 | -0.443 |
| 42d | n.d | -0.535 | -0.666 | -0.485 |
| 56d | n.d | -0.594 | -0.74 | -0.523 |
| Bond strength [Mpa] | 1.5 | 3.44 | 2.8 | 3.37 |
| E. resistivity 50d [Ωm] | n.d | 515 | n.d. | n.d. |
| LWTR 24w [Kg/m2*Vh] | n.d | 0.034 | n.d. | n.d. |

## Claims

1. Composition comprising
- at least one waterbased polyurethane dispersion containing ethylene oxide units;
- at least one cement;
- at least one calcined clay; and
- at least one mineral filler.

2. Composition according to claim 1, **characterized in that** the polyurethane dispersion contains an amount of ethylene oxide units in the range of from 5 to 50 weight-% based on the total weight of the polyurethane polymer without water, diluents or other additives.

3. Composition according to any one of the preceding claims, **characterized in that** the polyurethane dispersion is free of incorporated ionic groups.

4. Composition according to any one of the preceding claims, **characterized in that** the mineral filler is selected from the group consisting of quartz flour, quartz sand, limestone sand, river sand, calcium carbonate, chalk, baryte, dolomite, wollastonite, talc and titanium dioxide, preferably quartz sand and calcium carbonate.

5. Composition according to claim 4, **characterized in that** the mineral filler contains quartz sand and the ratio of quartz sand with a particle size of < 0.6 mm compared to quartz sand with a particle size of ≥ 0.6 mm is 0.3 - 2.0, preferably 0.5 - 1.5, more preferably 0.8 - 1.2.

6. Composition according to claim 4, **characterized in that** the mineral filler contains quartz sand and the ratio of quartz sand with a particle size of < 0.6 mm compared to quartz sand with a particle size of ≥ 0.6 mm is 2.5 - 10, preferably 3.5 - 7.5, more preferably 4.5 - 5.5.

7. Composition according to any one of the preceding claims, **characterized in that** the cement is selected from the group consisting of cements classified in DIN EN 197-1 as Portland cement (CEM I), Portland composite cement (CEM II), blast furnace slag cement (CEM III), pozzolanic cement (CEM IV), composite cement (CEM V); calcium aluminate cement; and calcium sulfoaluminate cement, preferably selected from cements classified in DIN EN 197-1 as Portland cement (CEM I) and calcium sulfoaluminate cement, most preferably the weight ratio of the cements classified in DIN EN 197-1 as Portland cement (CEM I) and the calcium sulfoaluminate cement is 2 - 20, preferably 7.5 - 15, more preferably 10 - 13.5.

8. Composition according to any one of the preceding claims, **characterized in that** the composition contains calcium oxide.

9. Composition according to any one of the preceding claims, **characterized in that** the calcined clay is metakaolin.

10. Composition according to any one of the preceding claims, **characterized in that** the composition contains calcium sulfate.

11. Composition according to any one of the preceding claims, **characterized in that** the composition contains supplementary cementitious materials (SMC) selected from the group consisting of fly ash, slag, pozzolans and silica fume, preferably slag.

12. Composition according to any one of the preceding claims, **characterized in that** it is a multi component composition comprising
- a first component comprising the at least one waterbased polyurethane dispersion containing ethylene oxide units, and
- a second component comprising at least one cement, at least one calcined clay and at least one mineral filler,
wherein the first component is a waterbased fluid and the second component is a solid powder or granular material.

13. Composition according to any one of the preceding claims, **characterized in that** it contains
- 1 to 10 weight-%, more preferably 1 to 3 weight-%, of polyurethane polymer;
- 0 to 5 weight-%, preferably 0.1 to 2 weight-%, diluents;
- 10 to 30 weight-%, preferably 15 to 25 weight-%, of Portland cement (CEM I);
- 1 to 10 weight-%, preferably 1.5 to 7.5 weight-%, of calcium aluminate cement;
- 1 to 5 weight-%, preferably 1,5 to 3 weight-%, of calcined clay, preferably metakaolin;
- preferably 0.2 to 2.0 weight-%, more preferably 0.6 to 1.25 weight-%, of calcium oxide;
- preferably 1 to 5 weight-%, preferably 1,5 to 3 weight-%, of calcium sulphate;
- 5 to 20 weight-%, preferably 10-15 weight-%, of latent hydraulic material, preferably slag;
- 20 to 70 weight-%, more preferably 40 to 50 weight-%, of mineral fillers, preferably calcium carbonate and quartz sand;
- 5 to 30 weight-%, particularly 10 to 20 weight-%, of water; and
- 0 to 2 weight-%, preferably 0.5 to 1 weight-%, of additives,
based on the total weight of the composition.

14. Process to produce the composition according to claim 1 or 13 by providing
- a first component comprising at least one waterbased polyurethane dispersion containing ethylene oxide units,
- a second component comprising at least one cement, at least one calcined clay and at least one mineral filler,
- and optionally further components,
wherein these components are each separately storage stable in a suitable container.

15. Process according to claim 14, **characterized in that** it is followed by the application of the composition, comprising the steps of
- mixing the first and the second and optionally further components of the composition by a suitable method,
- applying the mixed composition with a suitable method within its workability time, and
- hardening or curing of the composition by setting of the cement.

16. Hardened composition obtained by the process according to claim 14 or 15.

17. Use of the composition according to any one of claim 1 to 13 as waterproofing mortar.
